# FASCICULE DE BREVET EUROPEEN

(11) **EP 3 087 207 B1**
(45) Date de publication et mention de la délivrance du brevet: **08.12.2021**
(21) Numéro de dépôt: 14833149.9
(22) Date de dépôt: 22.12.2014
(51) Int. Cl.: C22C 38/02, C22C 38/06, C22C 38/42, C22C 38/44, C22C 38/40, C21D 9/00, C21D 1/20, C21D 1/42, C21D 1/60, C21D 8/06, C21D 9/52, C21D 1/30, C21D 1/26, C22C 38/00, C22C 38/04, C22C 38/22, C22C 38/18, C21D 1/607, C21D 1/18

(54) **FIL LAMINÉ À FROID EN ACIER À HAUTE RÉSISTANCE À LA FATIGUE ET À LA FRAGILISATION PAR L'HYDROGÈNE ET RENFORT DE CONDUITES FLEXIBLES L'INCORPORANT**
KALTGEWALZTER STAHLDRAHT MIT HOHEM WIDERSTAND GEGEN WASSERSTOFFVERSPRÖDUNG UND -ERMÜDUNG SOWIE VERSTÄRKUNG FÜR SCHLÄUCHE DAMIT
COLD-ROLLED STEEL WIRE HAVING HIGH RESISTANCE TO HYDROGEN EMBRITTLEMENT AND FATIGUE AND REINFORCEMENT FOR FLEXIBLE PIPES INCORPORATING SAME

(30) Priorité: 24.12.2013 WO PCT/FR2013/000370
(43) Date de publication de la demande: 02.11.2016
(60) Demande divisionnaire: 21202501.9
(73) Titulaire: Arcelormittal Wire France, 01000 Bourg en Bresse (FR)
(72) Inventeur: FOISSEY, Sylvain, 01800 Meximieux (FR); BASCOURT, Gaëlle, 01440 Viriat (FR)
(74) Mandataire: Lavoix
(86) Numéro de dépôt international: PCT/FR2014/000301
(87) Numéro de publication internationale: WO 2015/097354

(56) Documents cités:
- WO-A1-96/28575
- WO-A1-2005/075697
- WO-A1-2011/039885
- WO-A1-2013/154129
- US-A1- 2013 186 521
- "HIGH HYDROGEN RESISTANT STAINLESS STEEL SPRING WIRE FOR FUEL CELLS", SEI TECHNICAL REVIEW, SUMITOMO ELECTRIC INDUSTRIES, OSAKA, JP, no. 57, 1 janvier 2004 (2004-01-01), page 47, XP009070908, ISSN: 1343-4349
- YOSHIRO FUJINO, NOZOMU KAWABE, HIROMU IZUMIDA: "Development of Highly Hydrogen-resistant Stainless Steel Spring Wire", NEW MATERIALS, no. 61, 30 janvier 2006 (2006-01-30), pages 60-64, XP002730085,
- None

## Description

La présente invention concerne le domaine de la métallurgie destinée à l'exploitation pétrolière maritime. Elle a trait plus particulièrement aux fils d'acier utilisables en tant qu'éléments de renfort ou de structure de composants ou d'ouvrages immergés en eau profondes, comme les conduites off shore flexibles, qu'elles soient utilisées pour transporter des hydrocarbures liquides ou gazeux.

On sait qu'une exigence première concernant les fils de ce type est, outre des caractéristiques mécaniques élevées, une bonne résistance à la fragilisation par l'hydrogène en milieu acide sulfuré, en particulier sous forme de H₂S présent dans les fluides et hydrocarbures transportés.

Aujourd'hui, l'offre commerciale dans le domaine des fils d'acier pour utilisation en off-shore se situe principalement dans des nuances faiblement alliées présentant une résistance à la rupture Rm de 800 MPa environ.

Pour fabriquer ces fils laminés à froid, on utilise, de manière connue, des aciers au manganèse comprenant de 0,15 à 0,80 % en poids de carbone dont la microstructure initiale est perlito-ferritique. Après mise en forme du fil machine laminé rond initial, on lui applique un traitement thermique de détente approprié pour obtenir la dureté requise. Cependant, les fils laminé à froid obtenus par ces procédés classiques ne résistent pas aux conditions d'acidité relativement sévères rencontrées en eaux profondes, dues à une forte présence d'H₂S dans l'hydrocarbure transporté.

En outre, les conduites off shore flexibles doivent à présent servir à des profondeurs d'immersion encore plus grandes, ce qui nécessite d'accroître la résistance mécanique à la rupture au-delà de 800 MPa ainsi que la résistance à la corrosion en fatigue générée par la présence d'H₂S et de CO2.

En outre, la contrainte du marché est de plus en plus forte sur les prix, ce qui obère corrélativement l'appel habituel aux éléments d'alliage nobles, comme le chrome, le niobium, etc.... ou à des étapes de traitement longues ou multiples et donc couteuses, surtout si elles doivent être conduites à chaud.

WO 96/28575 décrit un procédé de fabrication de fils d'acier, dans lequel un fil de forme allongée est produit par laminage ou étirage d'acier constitué de 0,05-0,8% de C, 0,4-1,5% de Mn, 0-2,5% de Cr, 0,1-0,6% de Si, 0-1% de Mo pas plus de 0,25% de Ni et pas plus de 0,02% de S et de P, et un premier traitement thermique est effectué sur le fil mis en forme, comprenant au moins une étape de trempe dans des conditions prédéterminées pour atteindre une dureté HRC d'au moins 32, une structure d'acier à prédominance martensitique et bainitique et une petite quantité de ferrite. L'invention concerne un fil métallique façonné et un tube flexible destiné à véhiculer un effluent contenant du H2S.

FR 2 960 556 décrit un fil de forme en acier au carbone faiblement allié destiné à être utilisé dans le secteur de l'exploitation pétrolière off shore, caractérisé en ce qu'il présente la composition chimique suivante, exprimée en pourcentages pondéraux de la masse totale, le reste étant du fer et les impuretés inévitables venant de l'élaboration du métal à l'état liquide: 0,75 < C % < 0,95 et 0,30 < Mn % < 0,85 avec Cr ≤ 0,4%; V ≤ 0,16%; Si ≤ 1,40% et de préférence ≥ 0,15%; et éventuellement pas plus de 0,06% d'AI, pas plus de 0,1% de Ni, et pas plus de 0,1% de Cu, et en ce qu'il est obtenu à partir d'un fil machine rond laminé à chaud, ayant de 5 à 30 mm de diamètre environ, soumis à un traitement thermomécanique, selon deux étapes successives et ordonnées, à savoir d'abord une trempe pour conférer au fil machine une microstructure perlitique homogène, puis une opération de transformation mécanique à froid (tréfilage et/ou laminage) avec un taux d'écrouissage global à peine légèrement supérieur à 50%, pour lui donner sa forme définitive, et en ce que qu'il est alors soumis à un traitement thermique de restauration lui conférant les caractéristiques mécaniques désirées.

Le but de l'invention est donc de mettre à disposition un fil d'acier présentant de très bonnes propriétés de résistance à la fragilisation par hydrogène en environnement acide (de type H₂S) et de très bonnes propriétés de résistance à la corrosion en fatigue (CO2 + H₂S) pour satisfaire les nouvelles contraintes des marchés du pétrole et du gaz, en employant notamment une composition d'acier faiblement alliée.

Plus particulièrement, on recherche une absence de fissurations internes après des tests sous contraintes pendant 30 jours à un pH de 4,1 dans un environnement contenant 5 mbar d'H₂S, voire plus (résistance à la fragilisation par hydrogène).

On recherche également une absence de rupture en fatigue après 2 millions de cycles de flexion sous une contrainte alternée de +100 MPa à +600 MPa dans un environnement corrosif contenant du CO2 et de l'H₂S. De façon plus particulièrement préférée, on recherche une absence de rupture en fatigue pouvant aller jusqu'à 4 millions de cycles (résistance à la corrosion en fatigue).

Outre ces propriétés d'usages des fils, on recherche également de bonnes propriétés mécaniques et, notamment, une résistance mécanique à la rupture Rm allant de 900 à 1300 MPa et une ductilité A supérieure ou égale à 10% pour faciliter les opérations de mise en forme.

A cet effet, l'invention est définie dans les revendications annexées.

La teneur en carbone est comprise entre 0,2 et 0,6% en poids. La valeur basse permet de garantir l'obtention d'une dureté suffisante en sortie de traitement thermique. La teneur maximale est limitée à 0,6% pour garder suffisamment de ductilité nécessaire à la mise en forme à froid lors de la fabrication du fil.

La teneur en manganèse est comprise entre 0,5 et 1,0% en poids. La valeur basse permet de garantir l'obtention de la microstructure majoritairement bainitique qui est recherchée. La teneur maximale est limitée à 1,0% pour éviter la formation de phases peu déformables comme la martensite.

La teneur en silicium est comprise entre 0,1 et 0,5% en poids. La valeur basse, en lien avec la valeur basse de chrome, permet de garantir l'obtention de la microstructure visée par l'invention dans toute la section du film de forme. La teneur maximale est limitée à 0,5% pour là aussi ne pas former de martensite lors du traitement thermique, car cette phase n'est ensuite pas déformable.

La teneur en chrome est comprise entre 0,2 et 1,0% en poids. La valeur basse, en lien avec la valeur basse de silicium, permet de garantir l'obtention de la microstructure visée par l'invention dans toute la section du film de forme. La teneur maximale est limitée à 1,0% pour ne pas former de martensite lors du traitement thermique.

La teneur en phosphore est limitée à 0,020% en poids afin de limiter les ségrégations néfastes à al résistance à la fragilisation par hydrogène et vis-à-vis de la tenue en fatigue.

La teneur en soufre est limitée à 0,015% en poids pour limiter la présence d'inclusions néfastes vis-à-vis de la tenue en fatigue et de la fragilisation par l'hydrogène.

La teneur en azote est limitée à 0,010% en poids pour limiter la présence de nitrures néfastes vis-à-vis de la tenue en fatigue.

La nuance peut également comprendre jusqu'à 0,07% d'AI, jusqu'à 0,2% de Ni, jusqu'à 0,1% de Mo, et jusqu'à 0,1% de Cu. On limite la présence de ces éléments car ils sont à l'origine de comportements dispersifs lors du traitement thermique.

Un autre élément essentiel des fils selon l'invention est que la microstructure de l'acier qui les constitue comprend de la bainite. Elle peut en outre comprendre de la ferrite aciculaire jusqu'à une proportion de 35% en surface. De la perlite généralement lamellaire peut également être présente jusqu'à 15% en surface, de préférence jusqu'à 10% en surface et de façon plus particulièrement préférée, est totalement absente de la microstructure, car sa présence n'est pas recherchée.

La microstructure visée peut donc être bainitique ou bainito-ferritique, la somme des phases de bainite et de ferrite aciculaire étant supérieure à 50% en surface, de préférence supérieure à 70% en surface et de façon plus particulièrement préférée supérieure à 90% en surface, voire égale à 100% en surface.

Outre la perlite dont la proportion est limitée, on cherche également à éviter la présence de martensite qui ne permettrait pas de fabriquer un fil selon l'invention.

Les fils laminé à froid selon l'invention (parfois appelés fil de forme) peuvent prendre toute section adaptée à leur utilisation finale. En particulier, ils peuvent présenter une section droite ronde, généralement obtenue par exemple par simple tréfilage à partir d'un fil machine de plus gros diamètre.

Ils peuvent aussi avoir une section rectangulaire ou en méplat ou profilée en U, en Z, en T, etc., qui nécessiteront généralement de combiner une opération de tréfilage et une opération de laminage. Ces dernières sections, de forme plus complexe permettent aux fils de s'emboîter en rives les uns dans les autres, ou d'être agrafés pour former des nappes d'armature articulées.

Ils sont plus particulièrement destinés à l'exploitation pétrolière "off shore" pour constituer du fil d'armage, de frette ou de voûte entrant dans la structure des pipe-lines et autres conduites flexibles. Les fils laminés à froid en acier évoluent dans les pipe-lines entre deux couches de polymères extrudés, dans une zone appelée "annulaire".

Les fils selon l'invention pourront être fabriqués par tout procédé adapté permettant d'obtenir les caractéristiques d'usage recherchées. On préférera cependant mettre en œuvre un procédé selon les revendications annexées.

L'opération de relaxation de contraintes permet notamment d'améliorer la résistance à la fragilisation par l'hydrogène du fil.

Afin de mieux illustrer l'invention, des essais ont été réalisés à titre indicatif et non limitatif.

### Essais

Les tests réalisés pour évaluer les performances des fils selon l'invention ont été réalisés dans les conditions suivantes :
F ragilisation à l'hydrogène (test HIC & SSCC - normes NACE TM0177 et NACE TM0284)

Les fils d'acier sont plongés dans une solution aqueuse ayant un pH de 4,1 et soumise au barbotage d'un gaz contenant du CO2 et 5mbar de H₂S, sous une contrainte de 650 MPa. Le test dure 30 jours à l'issue desquels on examine les fils par ultra-sons pour vérifier la présence éventuelle de fissurations internes.

### Résistance à la fatigue en milieu corrosif

Les fils d'acier sont plongés dans une solution aqueuse ayant un pH de 5 et soumise au barbotage d'un gaz contenant du CO₂ et jusqu'à 5 mbar de H₂S sous une contrainte alternée en flexion de 100 MPa à 500 MPa. Le test s'arrête lorsque le fil casse et on note alors le nombre de millions de cycles atteints.

On élabore tout d'abord une série de nuances dont la composition chimique, en % en poids, est détaillée en tableau 1 :

**Tableau 1**

| | C | Mn | Si | Cr | P | S | N | Al | Ni | Mo | Cu |
|---|---|---|---|---|---|---|---|---|---|---|---|
| 1 | 0,360 | 0,680 | 0,210 | 0,250 | 0,010 | 0,011 | 0,007 | 0,045 | 0,050 | 0,010 | 0,050 |
| 2 | 0,340 | 0,700 | 0,180 | 0,350 | 0,011 | 0,008 | 0,006 | 0,043 | 0,060 | 0,015 | 0,060 |
| 3 | 0,320 | 0,725 | 0,180 | 0,406 | 0,011 | 0,010 | 0,003 | 0,020 | 0,020 | 0,015 | 0,009 |

Pour les nuances 1 à 3, on fabrique ensuite de façon classique des fils machines ronds laminés à chaud de 15 mm de diamètre que l'on enroule en bobine. Dans une seconde étape, on austénitise ensuite le fil préalablement dévidé à 1000°C dans un four à gaz pendant 6 minutes.

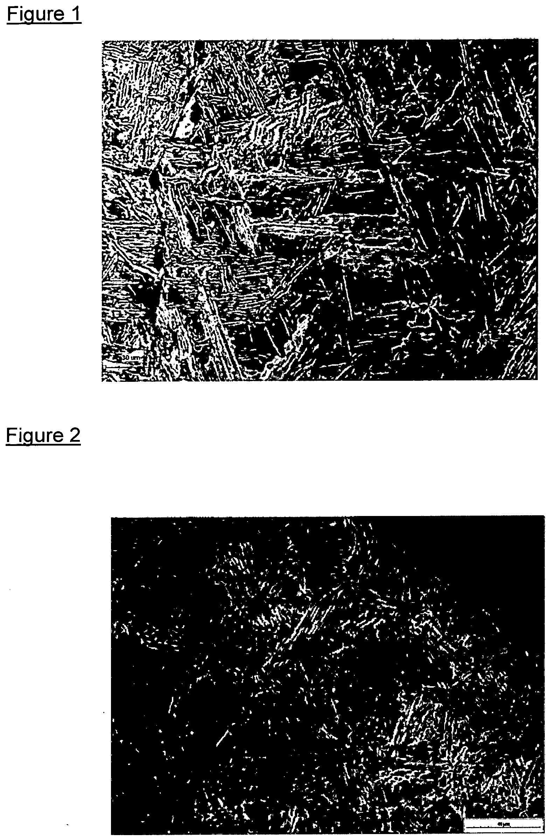

On réalise ensuite une trempe isotherme dans un bain de plomb fondu pendant 5 minutes à 500°C pour les nuances 1 et 2 et à 410°C pour la nuance 3, puis refroidi à l'eau de manière à conférer une structure ferrito/bainitique aux fils. La figure 1 présente une image micrographique montrant les différents constituants de la microstructure obtenue avec la nuance 1 (bainite, ferrite aciculaire et perlite lamellaire) et qui comporte moins de 35% de ferrite aciculaire et moins de 15% de perlite. La figure 2 présente une image micrographique montrant les différents constituants de la microstructure obtenue avec la nuance 3 comportant 70% de bainite et 30% de ferrite aciculaire et de perlite lamellaire.

Les fils sont ensuite tréfilés avec une réduction de section de 30% pour donner un fil rond de diamètre 12,54 mm puis laminés à froid avec une réduction d'épaisseur de 50% pour donner un fil plat dont la section est de 16 mm x 6,3 mm. Le taux d'écrouissage global qui correspond au pourcentage de réduction de section à l'issue des deux opérations à froid est ici de 57%. Les fils sont ensuite soumis à un traitement de relaxation de contraintes à une température de 600°C pendant 30 secondes.

On les soumet ensuite aux tests d'évaluation de leurs propriétés d'usage, dont les résultats sont rassemblés en tableau 2 :

**Tableau 2**

| Nuance | Rm (MPa) | A (%) | Nombre de fissures internes | Millions de cycles avant rupture |
|---|---|---|---|---|
| 1 | 900 | 13 | 0 (650 MPa) | 2 000 000 |
| 2 | 1000 | 11 | 0 (650 MPa) | 5 000 000 |
| 3 | 1200 | 11 | 0 (650 MPa) | 1 800 000 |

| | | | | |
|---|---|---|---|---|
| NR : non réalisé | | | | |

Il va de soi que l'invention ne saurait se limiter aux exemples décrits, mais qu'elle s'étend à de multiples variantes et équivalents.

## Revendications

1. Fil laminé à froid en acier, **caractérisé en ce qu'**il présente la composition chimique suivante, exprimée en pourcentages en poids,
0,2 ≤ C % ≤ 0,6
0,5 ≤ Mn % ≤ 1,0
0,1 ≤ Si ≤ 0,5 %
0,2 ≤ Cr ≤ 1,0%
P ≤ 0,020%
S ≤ 0,015%
N ≤ 0,010%
et éventuellement pas plus de 0,07% d'AI, pas plus de 0,2% de Ni, pas plus de 0,1% de Mo, et pas plus de 0,1% de Cu, le reste étant du fer et les inévitables impuretés venant de l'élaboration, ledit fil présentant une microstructure comprenant de la bainite et, éventuellement, jusqu'à 35% de ferrite aciculaire et jusqu'à 15% de perlite, la somme des phases de bainite et de ferrite aciculaire étant supérieure à 50%, dont la résistance mécanique à la rupture Rm est compris entre 900 et 1300 MPa et dont la ductilité A est supérieure ou égale à 10%.

2. Procédé de fabrication d'un fil laminé à froid selon la revendication 1 comprenant les étapes consistant à :
a. alimenter un fil machine d'acier laminé à chaud dont le diamètre est supérieur ou égal à 10 mm,
b. soumettre ledit fil machine à un traitement thermique d'austénitisation à une température supérieure à 950°C, puis
c. refroidir ledit fil machine par une trempe isotherme à une température comprise entre 350 et 600°C afin d'obtenir une structure comprenant au moins 50% de bainite et, éventuellement, jusqu'à 35% de ferrite aciculaire et jusqu'à 15% de perlite, puis finir le refroidissement jusqu'à température ambiante à une vitesse de refroidissement comprise entre 30°C/s et 100°C/s,
d. soumettre ledit fil machine refroidi à une opération de transformation mécanique à froid menée avec un taux d'écrouissage global compris entre 40 et 90%, afin d'obtenir une résistance mécanique à la traction Rm d'au moins 800 MPa puis
e. le soumettre à un éventuel traitement thermique de relaxation de contraintes.

3. Procédé de fabrication selon la revendication 2, dans lequel ledit traitement thermique d'austénitisation subit par le fil machine est réalisé en continu, dans un four à gaz ou dans un four à induction sur le fil préalablement dévidé.

4. Procédé de fabrication selon l'un ou l'autre des revendications 2 ou 3, dans lequel ledit traitement thermique d'austénitisation est réalisé pendant une durée de 2 à 10 minutes.

5. Procédé de fabrication selon l'une quelconque des revendications 2 à 4, dans lequel ledit refroidissement du fil machine est effectué par trempe isotherme dans un bain en fusion à base de plomb ou de sels, le temps d'immersion étant compris entre 1 et 10 min, suivi d'un refroidissement à l'eau.

6. Conduite flexible pour le secteur de l'exploitation d'hydrocarbures comprenant au moins un fil laminé à froid selon la revendication 1 ou obtenu par le procédé selon l'une quelconque des revendications 2 à 5.

## Patentansprüche

1. Kaltgewalzter Draht aus Stahl, **dadurch gekennzeichnet, dass** er die folgende chemische Zusammensetzung hat, ausgedrückt in Gewichtsprozenten,
0,2 ≤ C% ≤ 0,6
0,5 ≤ Mn % ≤ 1,0
0,1 ≤ Si ≤ 0,5%
0,2 ≤ Cr ≤ 1,0%
P ≤ 0,020%
S ≤ 0,015%
N ≤ 0,010%
und eventuell nicht mehr als 0,07% AL, nicht mehr als 0,2% Ni, nicht mehr als 0,1% Mo und nicht mehr als 0,1% Cu, wobei der Rest Eisen und unvermeidbare, aus der Herstellung stammende Verunreinigungen sind, wobei der Draht eine Mikrostruktur hat, die aufweist Bainit und, eventuell, bis zu 35% Nadelferrit und bis zu 15% Perlit, wobei die Summe der Bainit- und Nadelferrit-Phasen größer als 50% ist, wobei seine mechanische Bruchfestigkeit Rm zwischen 900 und 1300 MPa beträgt und wobei seine Duktilität A größer oder gleich 10% ist.

2. Verfahren zur Herstellung eines kaltgewalzten Drahts gemäß Anspruch 1, aufweisend die Schritte, die bestehen aus:
a. Zuführen eines warmgewalzten Walzdrahts aus Stahl, dessen Durchmesser größer oder gleich 10 mm ist,
b. Unterziehen des besagten Walzdrahts einer thermischen Austenitisierungs-Behandlung bei einer Temperatur größer als 950°C, dann
c. Abkühlen des besagten Walzdrahts mittels isothermer Abschreckung bei einer Temperatur, die zwischen 350 und 600°C beträgt, um eine Struktur zu erlangen, die aufweist wenigstens 50% Bainit und, eventuell, bis zu 35% Nadelferrit und bis zu 15% Perlit, dann Fertigstellen des Abkühlens bis auf Umgebungstemperatur mit einer Kühlgeschwindigkeit, die zwischen 30°C/s und 100°C/s beträgt,
d. Unterziehen des besagten abgekühlten Walzdrahts einem mechanischen Kalt-Umformungsvorgang, der durchgeführt wird mit einer globalen Kaltverformungsquote, die zwischen 40 und 90% beträgt, um eine mechanische Zugfestigkeit Rm von wenigstens 800 MPa zu erlangen, dann
e. ihn Unterziehen einer eventuellen thermischen Behandlung zur Spannungsrelaxation.

3. Verfahren zur Herstellung gemäß Anspruch 2, wobei die von dem Walzdraht erfahrene thermische Austenitisierungs-Behandlung kontinuierlich realisiert wird in einem Gasofen oder in einem Induktionsofen auf den vorab abgewickelten Draht.

4. Verfahren zur Herstellung gemäß dem einen oder dem anderen der Ansprüche 2 oder 3, wobei die besagte thermische Austenitisierungs-Behandlung realisiert wird während einer Dauer von 2 bis 10 Minuten.

5. Verfahren zur Herstellung gemäß irgendeinem der Ansprüche 2 bis 4, wobei das besagte Abkühlen des Walzdrahts durchgeführt wird mittels isothermen Abschreckens in einem Schmelz-Bad basierend auf Blei oder Salzen, wobei die Eintauchzeit zwischen 1 und 10 min beträgt, gefolgt von einem Abkühlen mit Wasser.

6. Flexible Rohrleitung für den Bereich der Kohlenwasserstoffe-Nutzung, aufweisend wenigstens einen kaltgewalzten Draht gemäß Anspruch 1 oder der erlangt ist durch das Verfahren gemäß irgendeinem der Ansprüche 2 bis 5.

## Claims

1. Cold-rolled steel wire, **characterised in that** it has the following chemical composition, expressed in percentages by weight,
0.2 ≤ C% ≤ 0.6
0.5 ≤ Mn% ≤ 1.0
0.1 ≤ Si ≤ 0.5%
0.2 ≤ Cr≤ 1.0%
P ≤ 0.020%
S ≤ 0.015%
N ≤ 0.010%
and optionally no more than 0.07% Al, no more than 0.2% Ni, no more than 0.1% Mo, and no more than 0.1% Cu, the remainder being iron and the unavoidable impurities resulting from preparation, said wire having a microstructure comprising bainite and optionally up to 35% of acicular ferrite and up to 15% of perlite, the sum of the bainite and acicular ferrite phases being greater than 50%, the mechanical tensile strength Rm of which wire is between 900 and 1300 MPa and the ductility A of which wire is greater than or equal to 10%.

2. Method for producing a cold-rolled wire according to claim 1, comprising the steps of:
a. supplying a hot-rolled steel wire rod of which the diameter is greater than or equal to 10 mm,
b. subjecting said wire rod to an austenitising heat treatment at a temperature above 950°C, then
c. cooling said wire rod by isothermal quenching to a temperature between 350 and 600°C in order to obtain a structure comprising at least 50% bainite and optionally up to 35% acicular ferrite and up to 15% perlite, then finishing the cooling to ambient temperature at a cooling rate of between 30°C/s and 100°C/s,
d. subjecting said cooled wire rod to a cold mechanical transformation operation carried out at an overall work hardening rate of between 40 and 90%, in order to obtain a mechanical tensile strength Rm of at least 800 MPa, then
e. subjecting said wire rod to a possible stress relieving heat treatment.

3. Production method according to claim 2, wherein said austenitising heat treatment to which the wire rod is subjected is carried out continuously in a gas furnace or in an induction furnace on the wire that has first been unspooled.

4. Production method according to either claim 2 or claim 3, wherein said austenitising heat treatment is carried out for a period of 2 to 10 minutes.

5. Production method according to any of claims 2 to 4, wherein said cooling of the wire rod is carried out by isothermal quenching in a molten bath based on lead or salts, the immersion time being between 1 and 10 minutes, followed by water cooling.

6. Flexible pipe for the hydrocarbon extraction sector, comprising at least one cold-rolled wire according to claim 1 or obtained by the method according to any of claims 2 to 5.
